# FASCICULE DE BREVET EUROPEEN

(11) **EP 0 681 091 B1**
(45) Date de publication et mention de la délivrance du brevet: **10.03.1999**
(21) Numéro de dépôt: 95400975.9
(22) Date de dépôt: 28.04.1995
(51) Int. Cl.: F01K 23/16, F01D 25/28

(54) **Unité de production d'énergie électrique à cycle combiné comportant une turbine à gaz et une turbine à vapeur à plusieurs modules**
Kombikraftwerk mit einer Gasturbine und einer Dampfturbine bestehend aus mehreren Modulen
Combined cycle power plant with a gas turbine and a steam turbine having a plurality of modules

(30) Priorité: 03.05.1994 FR 9405389
(43) Date de publication de la demande: 08.11.1995
(73) Titulaire: GEC ALSTHOM ELECTROMECANIQUE SA, 75116 Paris (FR)
(72) Inventeur: Laffont, Patrick, F-92120 Montrouge (FR)
(74) Mandataire: Gosse, Michel

(56) Documents cités:
- EP-A- 0 407 132
- EP-A- 0 613 996
- FR-A- 1 338 871
- US-A- 5 271 217
- PATENT ABSTRACTS OF JAPAN vol. 7 no. 169 (M-231) [1314] ,26 Juillet 1983 & JP-A-58 074809 (MITSUBISHI) 6 Mai 1983,

## Description

La présente invention concerne une unité de production d'énergie électrique à cycle combiné comportant, montés successivement sur une même ligne d'arbres par l'intermédiaire d'accouplements rigides, le rotor d'une turbine à gaz, les rotors d'une turbine à vapeur à plusieurs modules et le rotor d'un générateur électrique, la turbine à gaz étant montée mobile en translation axiale, la ligne d'arbre étant équipée d'une butée liée en translation axiale aux parties non tournantes de la turbine à gaz ou du premier module de la turbine à vapeur.

L'association des deux turbomachines à écoulement axial sur une même ligne d'arbres permet de réduire les dimensions de la salle des machines par rapport au cas où chaque turbomachine entraîne son propre générateur électrique, de plus, cela permet de n'utiliser qu'un seul alternateur.

En revanche, cela conduit à des lignes d'arbres très longues induisant une dilatation axiale cumulée des différents rotors importante nécessitant de prévoir des jeux axiaux importants dans les veines des deux turbomachines.

Or ces jeux axiaux importants affectent sensiblement les performances de l'unité de production d'énergie électrique.

EP-A-0407132 concerne une unité de production d'énergie électrique à cycle combiné comportant, montés successivement sur une même ligne d'arbres par l'intermédiaire d'accouplements rigides, le rotor d'une turbine à gaz, les rotors d'une turbine à vapeur à plusieurs modules et le rotor d'un générateur électrique. La ligne d'arbre comprend une butée liée au palier arrière fixe de la turbine à gaz. La partie non tournante de la turbine à gaz est montée à déplacement axial, l'avant de la partie non tournante du premier module de la turbine à vapeur est montée fixe sur la fondation. Ainsi, la dilatation axiale est réduite entre la turbine à gaz et le premier module de la turbine à vapeur, la partie non tournante de la turbine à gaz se dilatant vers l'avant de la butée comme la partie de la ligne d'arbre associée, et la partie non tournante du premier module de la turbine à vapeur se dilatant vers l'arrière de la butée comme la partie de la ligne d'arbre associée. Le stator du module froid est relié à la fondation par un point fixe.

L'un des inconvénients de ce montage résulte du fait que la dilatation axiale relative entre les parties tournantes et les parties non tournantes des turbines n'est pas bien contrôlée, cela induit des déplacement axiaux relatifs entre les parties tournantes et les parties non tournantes des turbines qui affectent les performances de l'unité de production d'énergie.

US-A-5271217 concerne une unité de production d'énergie électrique à cycle combiné comportant, montés successivement sur une même ligne d'arbres par l'intermédiaire d'accouplements rigides, le rotor d'une turbine à gaz, les rotors d'une turbine à vapeur et le rotor d'un générateur électrique, la partie non tournante de la turbine à gaz étant montée mobile en translation axiale, la partie non tournante de la turbine à vapeur étant solidarisée à la fondation à ses deux extrémités, la ligne d'arbre étant équipée d'une butée liée en translation axiale aux parties non tournantes de la turbine à gaz. Les parties non tournantes de la turbine à gaz et de la turbine à vapeur sont reliées entre elles par des bielles. Ce montage permet de limiter les déplacements axiaux relatifs entre les parties tournantes et les parties non tournantes des turbines. Cependant il génère de nouveaux inconvénients notamment la dilatation axiale relative entre les bielles et la ligne d'arbre, ou la position des points fixes de la partie non tournante de la turbine à vapeur.

La présente invention a pour objet une unité de production d'énergie électrique à cycle combiné comprenant, d'avant vers l'arrière, montés sur une fondation, une turbine à gaz , suivie d'une turbine à vapeur ayant au moins un module chaud et un module froid, suivie d'un générateur électrique, les rotors de la turbine à gaz, de la turbine à vapeur et du générateur électrique formant une ligne d'arbres commune par l'intermédiaire d'accouplements rigides, le stator de la turbine à gaz étant monté mobile en translation axiale, la ligne d'arbre comprenant une butée liée en translation axial à la partie statorique arrière du stator de la turbine à gaz ou à la partie statorique avant du stator du module chaud de la turbine à vapeur, la partie statorique arrière de la turbine à gaz et la partie statorique avant du module chaud de la turbine à vapeur étant reliées entre elles par au moins deux bielles.

Selon l'invention, les bielles, l'extrémité arrière du rotor de la turbine à gaz, et l'extrémité avant du rotor du module chaud de la turbine à vapeur sont enfermées dans une enceinte remplie d'un fluide conducteur de la chaleur, et la partie statorique arrière du stator du modules de la turbine à vapeur qui précède le module froid de la turbine à vapeur est reliée à la fondation par un point fixe, le stator du module froid étant relié à la fondation par un autre point fixe.

Grâce à cette disposition, les jeux dans les veines de la turbine à gaz et du module chaud de la turbine à vapeur sont pratiquement les mêmes que dans le cas d'une unité de production d'énergie électrique à deux lignes d'arbres et les jeux axiaux dans les veines du module froid de la turbine à vapeur sont faiblement augmentés.

Dans une variante de réalisation l'unité de production d'énergie électrique comprend une turbine à vapeur ayant un module tiède intercalé entre le module froid et le module chaud, la partie statorique avant du stator du module tiède et la partie statorique arrière du stator du module chaud de la turbine à vapeur étant reliées par au moins deux bielles, et
lesdites bielles, l'extrémité arrière du rotor du module chaud et l'extrémité avant du rotor du module tiède de la turbine à vapeur étant enfermées dans une enceinte remplie d'un fluide conducteur de la chaleur.

De cette manière, les jeux des veines de la turbine à gaz et du module chaud de la turbine à vapeur sont toujours les mêmes que dans le cas d'une unité de production d'énergie à une seule ligne d'arbres et les jeux axiaux des modules froid et tiède de la turbine à vapeur sont faiblement augmentés.

L'enceinte peut être un carter en tôle contenant de l'huile de lubrification des paliers adjacents de la ligne d'arbres.

D'autres caractéristiques et avantages de l'invention ressortiront de la description ci-après de deux exemples de réalisation de l'invention, avec référence aux dessins ci-annexés sur lesquels:
- les figures 1 à 5 représentent schématiquement des unités de production d'énergie électrique de type connu,
- la figure 6 représente schématiquement une unité de production selon l'invention, comprenant une turbine à gaz et une turbine à vapeur à deux modules,
- la figure 7 représente schématiquement une unité de production selon l'invention, comprenant ne turbine à gaz et une turbine à vapeur à trois modules,
- la figure 8 représente schématiquement une vue agrandie d'une partie de la figure 7.

Dans la description qui va suivre module chaud de la turbine à vapeur correspond à un module de type HP ou HP/MP ou équivalent ; module tiède de la turbine à vapeur correspond à un module de type chauffage urbain ou équivalent ; et module froid de la turbine à vapeur correspond à un module de type BP.

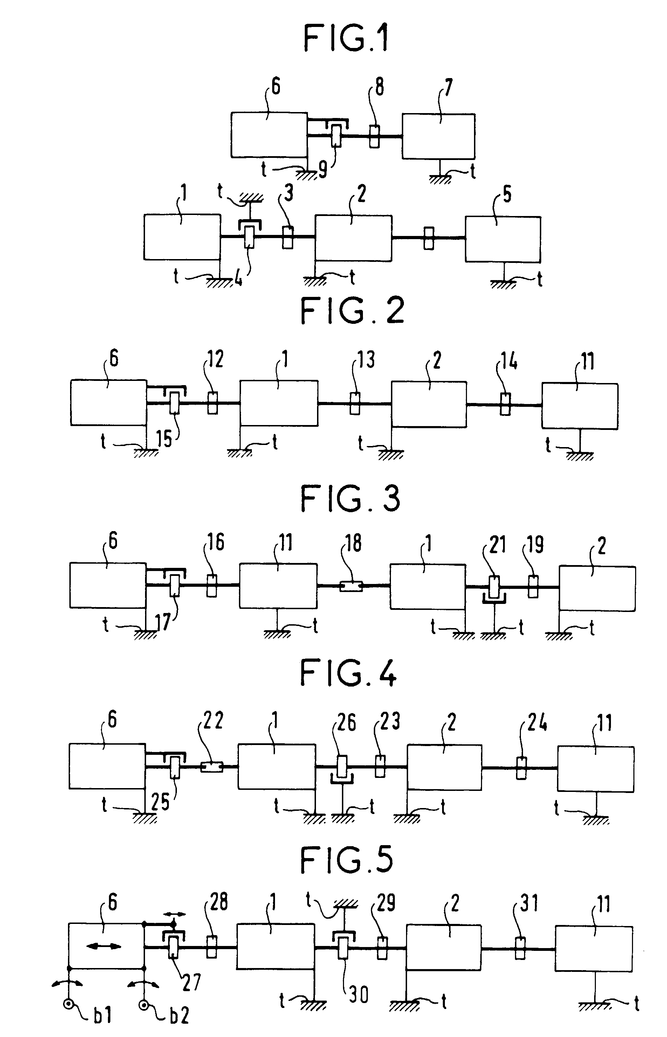

La figure 1 représente une unité de production d'énergie électrique associant une turbine à gaz et une turbine à vapeur; une telle association constitue une centrale électrique à cycle combiné qui peut être réalisé de plusieurs façons.

Dans le cas de la figure 1, on utilise deux lignes d'arbres séparées, chaque turbomachine entraînant son générateur électrique tel qu'un alternateur. La turbine à vapeur comporte généralement plusieurs modules tels qu'un module chaud 1 et un module froid 2 dont les parties tournantes ou rotors sont assemblés par un accouplement rigide 3 avec une butée fixe 4, et qui entraînent un premier alternateur 5. La turbine à gaz 6 entraîne un deuxième alternateur 7 auquel elle est reliée par un accouplement rigide 8 avec une butée fixe 9. Dans les dessins, le graphisme référencé "t" désigne une liaison (point fixe) entre les parties non tournantes d'une machine et le massif en béton (fondation) sur lequel sont placées les machines. Cette lettre t peut aussi désigner une liaison entre une butée fixe et le massif de béton.

Une unité comme celle schématisée dans la figure 1 nécessite une salle des machines de dimensions importantes et deux générateurs électriques séparés. On a donc conçu des unités comportant une seule ligne d'arbres. Dans le cas représenté schématiquement dans la figure 2, les différentes machines, à savoir la turbine à gaz 6, le module chaud 1, le module froid 2 et l'alternateur 11 sont montées successivement sur une même ligne d'arbres de l'avant (situé à gauche dans la figure) à l'arrière (à droite dans la figure); les rotors sont assemblés par l'intermédiaire d'accouplements rigides 12, 13 et 14, une butée 15 étant liée en translation axiale à la partie statorique de la turbine à gaz 6. Le stator de la turbine à gaz est fixé au massif en béton; cette liaison t se situe à l'arrière du module.

L'utilisation d'une seule ligne d'arbres conduit à des lignes d'arbres très longues; les dilatations des rotors sont excessives et il est nécessaire de prévoir des jeux axiaux importants dans les veines des deux turbomachines, ce qui diminue le rendement du fait des décalages entre les tuyères et les aubes.

Une autre réalisation est représentée schématiquement dans la figure 3; l'alternateur 11 est disposé entre la turbine à gaz 6 et le module chaud 1 de la turbine à vapeur; le rotor de l'alternateur 11 est assemblé avec le rotor de la turbine à gaz 6 par un accouplement rigide 16 et au rotor du module chaud 1 de la turbine à vapeur par un accouplement flexible 18; les rotors de l'alternateur et de la turbine à gaz sont positionnés axialement par la butée interne 17 de la turbine à gaz. Le stator de la turbine à gaz est fixé au massif en béton, cette liaison t se situant à l'arrière de la turbine à gaz; les rotors des deux modules 1 et 2 de la turbine à vapeur sont assemblés par un accouplement rigide 19 avec une butée 21 fixe par rapport au massif en béton et solidaire du rotor du module chaud 1.

Cette disposition permet de réduire les jeux axiaux dans les veines des deux turbomachines mais elle pose un problème de maintenance pour le générateur électrique en particulier pour la dépose du rotor de l'alternateur.

Dans la réalisation représentée schématiquement dans la figure 4, on utilise deux butées et un accouplement flexible 22 entre la turbine à gaz 6 et le module chaud 1; les autres machines sont assemblées par un accouplement rigide 23, respectivement 24. Une première butée 25 est reliée au stator de la turbine à gaz 6 et une deuxième butée 26, fixe par rapport au massif en béton, est prévue entre les deux modules 1 et 2 de la turbine à vapeur; elle correspond à la butée 21 de la figure 3.

Dans ce cas, l'accouplement flexible 22 doit supporter des couples permanents et transitoires élevés quand la puissance de la turbine à gaz est élevée (par exemple supérieure à 200 MW) et cette solution est donc limitée en puissance.

Une autre possibilité est représentée schématiquement dans la figure 5: la turbine à gaz 6 est montée sur des bielles articulées bl, b2 permettant un déplacement axial des parties non tournantes ; d'autre part, par l'intermédiaire de la butée interne 27 de la turbine à gaz, solidaire du stator, le rotor de ladite turbine à gaz suit le déplacement axial du module; tous les rotors des machines, à savoir la turbine à gaz 6, les deux modules 1 et 2 de la turbine à vapeur et l'alternateur 11 sont montées successivement de l'avant vers l'arrière au moyen d'accouplements rigides 28, 29 et 31 et une butée fixe 32 est solidaire de l'arbre du module chaud 1 de manière analogue à la butée fixe 21 de la figure 3.

Cette réalisation présente l'inconvénient que les efforts sur les butées sont mal connus et peuvent atteindre des valeurs inacceptables. En effet, la butée mobile 27 assure le positionnement axial de la turbine à gaz (rotor et stator) dont la masse peut atteindre 400 tonnes; la butée fixe 30 assure le positionnement axial de la turbine à gaz et de l'ensemble de la ligne d'arbres. Ainsi ces masses importantes peuvent, par exemple lors d'un séisme, engendrer des efforts destructeurs sur ces deux butées.

La présente invention a pour objet une unité de production d'énergie électrique à cycle combiné à une seule ligne d'arbres, équipée de moyens simples et robustes qui permettent de limiter les jeux axiaux dans les veines des deux turbomachines et, par suite, d'obtenir un bon rendement.

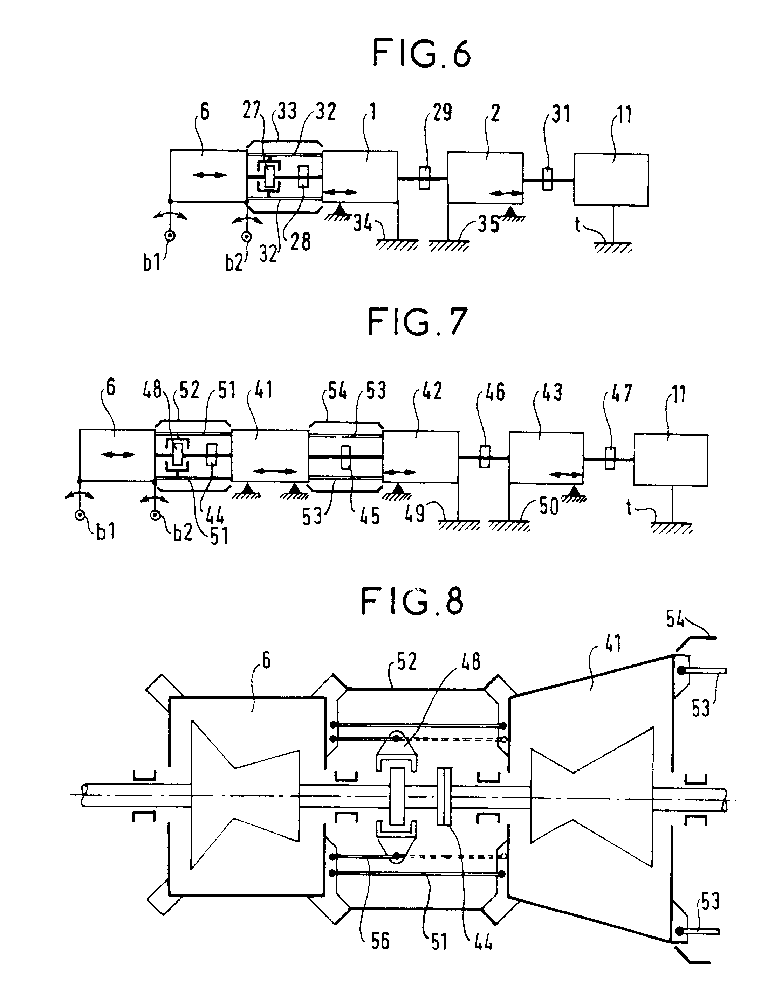

Un premier exemple de réalisation est représenté schématiquement dans la figure 6; la succession des machines est identique à celle de l'installation de la figure 5; les rotors sont également assemblés au moyen d'accouplements rigides 28, 29 et 31. Le stator de la turbine à gaz 6 est monté mobile en translation axiale. La ligne d'arbre comprend une butée 27 liée en translation axiale à la partie statorique arrière du stator de la turbine à gaz. La partie statorique arrière de la turbine à gaz 6 et la partie statorique avant du module chaud 1 de la turbine à vapeur sont reliées entre elles par des bielles 32 disposées de manière régulière autour des arbres des deux machines; ces bielles 32 sont au moins au nombre de deux et diamétralement opposées par rapport à la ligne d'arbres. La butée liée 27 est donc solidaire de la turbine à gaz et du module chaud de la turbine à vapeur.

Selon l'invention les bielles 32, l'extrémité arrière du rotor de la turbine à gaz 6 et l'extrémité avant du rotor du module chaud 1 de la turbine à vapeur sont enfermées dans une enceinte 33 remplie d'un fluide conducteur de la chaleur.

De cette manière, on peut limiter la température de ces différents éléments à une valeur faible et homogène entre les bielles et les extrémités de rotors, par exemple 60°C, ce qui permet de limiter leur dilatation propre et différentielle. Ceci est particulièrement important pour les bielles de liaison dont la longueur peut atteindre 3 à 4 mètres.

En outre la partie statorique arrière du stator du module chaud 1 de la turbine à vapeur qui précède le module froid 2 de la turbine à vapeur est reliée à la fondation par un point fixe 34, le stator du module froid 2 étant relié à la fondation par un autre point fixe 35.

La figure 7 représente un deuxième exemple de réalisation de l'invention dans lequel la turbine à vapeur comporte trois modules, par exemple un module chaud 41, un module tiède 42 et un module froid 43, assemblés successivement de l'avant vers l'arrière de la ligne d'arbres. Tous les rotors des machines sont assemblés au moyen d'accouplements rigides 44 à 47; La ligne d'arbre comprend une butée 48 liée en translation axiale à la partie statorique arrière du stator de la turbine à gaz. La partie statorique arrière de la turbine à gaz 6 et la partie statorique avant du module chaud 41 de la turbine à vapeur sont reliées entre elles par des bielles 51 disposées de manière régulière autour des arbres des deux machines; ces bielles 51 sont au moins au nombre de deux et diamétralement opposées par rapport à la ligne d'arbres. La butée liée 48 est donc solidaire de la turbine à gaz et du module chaud 41 de la turbine à vapeur.

Selon l'invention les bielles 51, l'extrémité arrière du rotor de la turbine à gaz 6 et l'extrémité avant du rotor du module chaud 41 de la turbine à vapeur sont enfermées dans une enceinte 52 remplie d'un fluide conducteur de la chaleur. La partie statorique arrière du stator du module tiède 42 de la turbine à vapeur qui précède le module froid 43 de la turbine à vapeur est reliée à la fondation par un point fixe 49, le stator du module froid 43 étant relié à la fondation par un autre point fixe 50.

Dans cette deuxième variante de réalisation, la partie statorique avant du stator du module tiède 42 et la partie statorique arrière du stator du module chaud 41 de la turbine à vapeur sont reliées par des bielles 53. L'extrémité arrière du rotor du module chaud 41 et l'extrémité avant du rotor du module tiède 42 de la turbine à vapeur sont enfermées dans une enceinte 54 remplie d'un fluide conducteur de la chaleur.

Quel que soit l'exemple de réalisation, la localisation du point fixe 35, 50 du module froid 2 sera choisi en fonction du type de module froid utilisé, et de sa liaison avec le condenseur. Dans le cas d'un module froid de type simple flux, le point fixe sera avantageusement localisé sur la partie avant du stator du module froid. Dans le cas d'un module froid de type double flux, le point fixe sera plus avantageusement localisé au milieu du stator du module froid.

En outre il peut être envisager de lier la butée mobile 27, 48 à la partie statorique avant du stator du module chaud 1 au lieu de la lier à la partie statorique arrière du stator de la turbine à gaz.

La figure 8 est un schéma représentant plus en détail la liaison entre la turbine à gaz 6 et le module chaud 41. On distingue dans cette figure l'accouplement rigide 44 entre les deux arbres des machines et les deux bielles 51 fixées à articulation à chacune de leurs extrémités sur un axe perpendiculaire à la direction radiale et solidaires des stators de la turbine à gaz et du module chaud de la turbine à vapeur. Le carter constituant l'enceinte 52 est également fixé sur les stators.

La butée mobile 48 est liée au stator du module 6 par des bielles 56 similaires aux bielles 51. Le carter 52 est un carter en tôle dans lequel on réalise une projection d'huile de lubrification sur l'ensemble de l'assemblage, à savoir les bielles 51 et 56, les arbres des deux modules, la butée mobile 48 et l'accouplement rigide 44. De cette manière, on peut limiter la température de ces différents éléments à une valeur faible et homogène entre les bielles et les extrémités de rotors, par exemple 60°C, ce qui permet de limiter leur dilatation propre et différentielle. Ceci est particulièrement important pour les bielles de liaison dont la longueur peut atteindre 3 à 4 mètres.

L'assemblage par bielles de la turbine à gaz et du module chaud de la turbine à vapeur, et, éventuellement des modules chaud et tiède de cette dernière permet de réduire dans de grandes proportions les jeux axiaux dans les veines des deux machines. En effet, si on se réfère à la figure 6, les références de dilatation étant prises par rapport au massif en béton qui est le repère absolu:
- si on suppose que le stator du module chaud 1 se dilate de 20mm, et si on admet que le rotor du module chaud 1 se dilate de 22mm, ce qui correspond à un allongement de la distance entre les éléments référencés 27 et 29 de 22mm.

Dans ce cas on peut dire que:
- le stator de la turbine à gaz 6 sera poussée par le module chaud 1 à l'aide des bielles 32 de 20mm vers la gauche car le point fixe du stator du module chaud 1 est situé à l'arrière du stator, et donc toute la dilatation du stator du module chaud s'effectuera vers l'avant.
- ce déplacement engendrera un déplacement de tous les rotors de 20mm vers la gauche, puisque la butée 27 est liée à la turbine à gaz,
- le rotor de la turbine à gaz étant immobile par rapport au stator de la turbine à gaz, les jeux axiaux entre le rotor et le stator de la turbine à gaz sont identiques à ceux de l'installation de la figure 1, donc optimaux,
- de même le rotor du module chaud 1 étant positionné par la butée mobile 27 sera fixe par rapport à la partie statorique avant du module chaud 1; donc les jeux axiaux dans le module chaud 1 sont optimaux,
- l'accouplement 29 se déplace par rapport au béton de -20mm + 22mm = 2mm
- le rotor du module froid 2 se déplace donc au niveau de l'accouplement 29 de 2mm. Il faut donc augmenter les jeux des veines du module froid 2 de 2 mm seulement par rapport à une installation idéale pour laquelle l'accouplement 29 aurait été immobile par rapport au massif en béton.

En conclusion, on peut dire que dans l'installation représentée dans la figure 6, une partie de l'allongement thermique du rotor du module chaud 1 est compensée par la dilatation du stator de ce module. Ce n'est pas le cas par exemple de l'installation de la figure 2 où l'accouplement 13 se déplacerait de 22mm vers la droite par rapport au massif de béton.

## Revendications

1. Unité de production d'énergie électrique à cycle combiné comprenant, d'avant vers l'arrière, montés sur une fondation, une turbine à gaz (6), suivie d'une turbine à vapeur ayant au moins un module chaud (1 ; 41) et un module froid (2 ; 43) suivie d'un générateur électrique (11), les rotors de la turbine à gaz (6), de la turbine à vapeur et du générateur électrique (11) formant une ligne d'arbres commune par l'intermédiaire d'accouplements rigides (28, 29, 31; 44-47), le stator de la turbine à gaz (6) étant monté mobile en translation axiale, la ligne d'arbre comprenant une butée (27; 48) liée en translation axiale à la partie statorique arrière du stator de la turbine à gaz ou à la partie statorique avant du stator du module chaud (1 ; 41) de la turbine à vapeur, la partie statorique arrière de la turbine à gaz (6) et la partie statorique avant du module chaud (1 ; 41) de la turbine à vapeur étant reliées entre elles par au moins deux bielles (32 ; 51), le stator du module froid étant relié à la fondation par un point fixe, caractérisée
en ce que lesdites bielles (32 ; 51), l'extrémité arrière du rotor de la turbine à gaz (6) et l'extrémité avant du rotor du module chaud (1 ; 41) de la turbine à vapeur sont enfermées dans une enceinte (33; 52) remplie d'un fluide conducteur de la chaleur, et
en ce que la partie statorique arrière du stator du module chaud (1, 41) de la turbine à vapeur qui précède le module froid de la turbine à vapeur est reliée à la fondation par un point fixe.

2. Unité de production d'énergie électrique selon la revendication 1, comportant une turbine à vapeur ayant un module tiède (42) intercalé entre le module froid (43) et le module chaud (41), caractérisée en ce que la partie statorique avant du stator du module tiède (42) et la partie statorique arrière du stator du module chaud (41) de la turbine à vapeur sont reliées par au moins deux bielles (53), et
en ce que lesdites bielles (53), l'extrémité arrière du rotor du module chaud (41) et l'extrémité avant du rotor du module tiède (42) de la turbine à vapeur sont enfermées dans une enceinte (54) remplie d'un fluide conducteur de la chaleur.

3. Unité de production d'énergie électrique selon la revendication 1 ou 2, caractérisée en ce que l'enceinte (33, 52, 54) est un carter en tôle contenant de l'huile de lubrification des paliers adjacents de la ligne d'arbres.

## Claims

1. An electricity generating unit having a combined cycle, and comprising, from the front to the rear, mounted on foundations, a gas turbine (6) followed by a steam turbine having at least one hot module (1; 41) and a cold module (2; 43), followed by an electricity generator (11), the rotors of the gas turbine (6), of the steam turbine and of the electricity generator (11) forming a common line of shafts via rigid couplings (28, 29, 31; 44-47), the stator of the gas turbine (6) being mounted to move in axial translation, the line of shafts being provided with an abutment (27; 48) constrained to move in axial translation with the rear stator portion of the stator of the gas turbine or with the front stator portion of the stator of the hot module (1; 41) of the steam turbine, the rear stator portion of the gas turbine (6) and the front stator portion of the hot module (1; 41) of the steam turbine being connected together via at least two links (32; 51), the stator of the cold module being connected to the foundations via a fixed point, said electricity generating unit being characterized in that said links (32, 51), the rear end of the rotor of the gas turbine (6), and the front end of the rotor of the hot module (1; 41) of the steam turbine are enclosed in an enclosure (33; 52) filled with a heat-conducting fluid, and in that the rear stator portion of the stator of the hot module (1, 42) of the steam turbine which precedes the cold module thereof is connected to the foundations via a fixed point.

2. An electricity generating unit according to claim 1, including a steam turbine having a warm module (42) interposed between the cold module (43) and the hot module (41), said electricity generating unit being characterized in that the front stator portion of the stator of the warm module (42) and the rear stator portion of the stator of the hot module (41) of the steam turbine are connected together via at least two links (53), and in that said links (53), the rear end of the rotor of the hot module (41). and the front end of the rotor of the warm module (42) of the steam turbine are enclosed in an enclosure (54) filled with a heat-conducting fluid.

3. An electricity generating unit according to claim 1 or 2. characterized in that the enclosure (33, 52, 54) is a sheet metal casing containing lubricating oil for the adjacent bearings of the line of shafts.

## Patentansprüche

1. Kombikraftwerk, welches auf einem Unterbau angebracht von vorn nach hinten eine Gasturbine (6), gefolgt von einer Dampfturbine mit wenigstens einem warmen Modul (1; 41) und einem kalten Modul (2; 43), gefolgt von einem elektrischen Generator (11), umfasst, wobei die Rotoren der Gasturbine (6), der Dampfturbine und des elektrischen Generators (11) über starre Kupplungen (28, 29, 31; 44-47) eine gemeinsame Wellenleitung bilden, wobei der Stator der Gasturbine (6) in axialer Translation beweglich angebracht ist, wobei die Wellenleitung einen Anschlag (27; 48) umfasst, der in axialer Translation mit dem hinteren Statorteil des Stators der Gasturbine oder mit dem vorderen Statorteil des Stators des warmen Moduls (1; 41) der Dampfturbine verbunden ist, wobei der hintere Statorteil der Gasturbine (6) und der vordere Statorteil des warmen Moduls (1; 41) der Dampfturbine durch wenigstens zwei Glieder (32; 51) miteinander verbunden sind, wobei der Stator des kalten Moduls durch einen festen Punkt mit dem Unterbau verbunden ist, **dadurch gekennzeichnet**, dass
die Glieder (32; 51), das hintere Ende des Rotors der Gasturbine (6) und das vordere Ende des Rotors des warmen Moduls (1; 41) der Dampfturbine in einem Raum (33; 52) eingeschlossen sind, der mit einem wärmeleitenden Fluid gefüllt ist, und
der hintere Statorteil des Stators des warmen Moduls (1, 41) der Dampfturbine, der dem kalten Modul der Dampfturbine vorhergeht, durch einen festen Punkt mit dem Unterbau verbunden ist.

2. Kraftwerk nach Anspruch 1, das eine Dampfturbine mit einem zwischen dem kalten Modul (43) und dem warmen Modul (41) eingefügtes lauwarmes Modul (42) aufweist, dadurch gekennzeichnet, dass der vordere Statorteil des Stators des lauwarmen Moduls (42) und der hintere Statorteil des Stators des warmen Moduls (41) der Dampfturbine durch wenigstens zwei Glieder (53) verbunden sind und
die Glieder (53), das hintere Ende des Rotors des warmen Moduls (41) und das vordere Ende des Rotors des lauwarmen Moduls (42) der Dampfturbine in einem Raum (54) eingeschlossen sind, der mit einem wärmeleitenden Fluid gefüllt ist.

3. Kraftwerk nach Anspruch 1 oder 2, dadurch gekennzeichnet, dass der Raum (33, 52, 54) ein Blechgehäuse ist, das Schmieröl für die der Wellenleitung benachbarten Lager enthält.
